(19) Europäisches Patentamt
European Patent Office
Office européen des brevets

(11) Veröffentlichungsnummer: **0 035 640**
**B1**

(12) # EUROPÄISCHE PATENTSCHRIFT

(45) Veröffentlichungstag der Patentschrift: **16.01.85**

(51) Int. Cl.[4]: **C 09 D 17/00**, C 08 K 5/19

(21) Anmeldenummer: **81100666.7**

(22) Anmeldetag: **30.01.81**

(54) **Hochkonzentrierte Füllstoffslurries.**

(30) Priorität: **08.02.80 DE 3004611**

(43) Veröffentlichungstag der Anmeldung: **16.09.81 Patentblatt 81/37**

(45) Bekanntmachung des Hinweises auf die Patenterteilung: **16.01.85 Patentblatt 85/3**

(84) Benannte Vertragsstaaten: **AT CH DE FR GB IT LI**

(56) Entgegenhaltungen:
**EP - A - 0 000 415**
**FR - A - 2 174 011**
**FR - A - 2 323 731**
**GB - A - 820 541**
**GB - A - 1 258 186**

**Lehrbuch der Lacke und Beschichtungen, Band II**

(73) Patentinhaber: **HOECHST AKTIENGESELLSCHAFT, Postfach 80 03 20, D-6230 Frankfurt am Main 80 (DE)**

(72) Erfinder: **May, Adolf, Dr., Dahlienweg 5, D-6238 Hofheim am Taunus (DE)**
Erfinder: **Voetz, Franz Josef, Weilstrasse 26, D-6277 Camberg/Taunus (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

## Beschreibung

Seit Jahren werden Füllstoffe für die Lack-, Farben-, Papier- und Klebstoffindustrie nicht nur in Pulverform, sondern auch als wässrige Slurry angeboten. Die Slurryform erspart den Trocknungsvorgang und beseitigt das lästige Staubproblem am Arbeitsplatz. Ein wesentlicher Nachteil ist aber die relativ geringe Feststoffkonzentration solcher Slurries, denn normalerweise lassen sich Füllstoffslurries nur mit einer Konzentration von 50 bis 60% an Feststoff herstellen. Die bei der Trocknung eingesparte Energie muss somit in der Regel durch den vermehrten Transportaufwand wieder ausgeglichen werden. Es wurde nun gefunden, dass sich durch Zugabe von oxalkylierten Fettammoniumsalzen die Viskosität solcher wässrigen Slurries herabsetzen oder ihre Konzentration an Feststoff erhöhen lässt.

Gegenstand der Erfindung sind somit hochkonzentrierte wässrige Füllstoffslurries mit einem Gehalt von 0,1 bis 5, vorzugsweise 0,2 bis 2,5 Gew.-% einer Verbindung der Formel

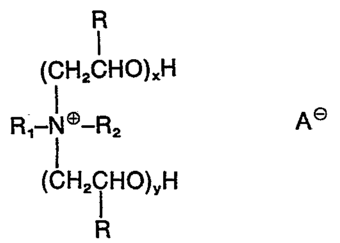

worin R Wasserstoff oder Methyl, $R_1$ $C_8$–$C_{24}$-, vorzugsweise $C_{10}$–$C_{18}$-Alkyl, $C_8$–$C_{24}$-, vorzugsweise $C_{10}$–$C_{18}$-Alkenyl oder $C_8$–$C_{24}$-, vorzugsweise $C_{10}$–$C_{18}$-Alkylphenyl, $R_2$ Wasserstoff, $C_1$–$C_4$-Alkyl, $C_1$–$C_4$-Hydroxyalkyl $C_2$–$C_4$-Epoxyalkyl, Benzyl oder eine Gruppe der Formel $-(CH_2CHO)_ZH$, X, Y
|
R
und Z zusammen eine Zahl von 1 bis 20, vorzugsweise 2 bis 15 und A ein Anion bedeutet.

Die Verbindungen der obigen Formel sind bekannt und können erhalten werden durch Aminolyse von Fettalkoholen und anschliessende Oxalkylierung nach bekannten Verfahren. Man erhält so zunächst die oxäthylierten Fettamine, die dann weiter oxalkyliert oder mit Säuren oder Alkylierungsreagenzien quaterniert werden. Als Anion X kommen die Anionen von Mineralsäuren oder organischen Säuren in Frage, wie Salzsäure, Schwefelsäure, Phosphorsäure, Borsäure, Ameisensäure, Essigsäure, Propionsäure, Milchsäure, Oxalsäure, Malonsäure, Bernsteinsäure oder Maleinsäure oder die anionischen Reste von Alkylierungsmitteln wie etwa Methosulfat, Ethersulfat, Dimethophosphat oder Diethophosphat. Die Herstellung der erfindungsgemässen Füllstoffslurries erfolgt durch einfaches Verrühren aller Komponenten in Wasser. Als Feststoff für solche Slurries kann hier beispielsweise Talkum, Kaolin, Calciumcarbonat oder Silikate aufgezählt werden.

Im folgenden sind einige Füllstoff-Slurries angegeben sowie Art und Menge der jeweils zugegebenen Hilfsmittel und die maximale Konzentration des Füllstoffs in der Slurry, die man bei der angegebenen Konzentration des Hilfsmittels erreicht. Der an 100% fehlende Rest ist in allen Fällen Wasser.

| Füllstoff<br>Talkum | max. Füllstoff-<br>konzentration |
|---|---|
| ohne Zusatz | 60 % |
| 2 % eines Oxäthylierungsprodukts aus 1 Mol Nonylphenol und 4 Mol Ethylenoxid | 61,5 % |
| 2 % eines Oxäthylierungsprodukts aus 1 Mol Nonylphenol und 9 Mol Ethylenoxid | 63,5 % |
| 2 % Na-Alkansulfonat | Ausflockung |
| 2 % Di-Alkyldimethylammoniumchlorid | 50 % |
| erfindungsgemäss: | |
| 1 % Verbindung 1 | 70,6 % |
| 2 % Verbindung 1 | 74,4 % |
| 2 % Verbindung 2 | 75,2 % |
| 1 % Verbindung 3 | 78,3 % |
| 2 % Verbindung 4 | 68 % |
| 1 % Verbindung 5 | 73,8 % |
| 2 % Verbindung 6 | 68 % |

| Füllstoff<br>Plastorit | max. Füllstoff-<br>konzentration |
|---|---|
| ohne Zusatz | 50% |
| 2 % Verbindung 2 | 68,8 % |
| 2 % Verbindung 1 | 69,5 % |

| Füllstoff<br>Dolomit | max. Füllstoff-<br>konzentration |
|---|---|
| ohne Zusatz | 66,7 % |
| 0,5 % Verbindung 1 | 78,3 % |
| 0,5 % Verbindung 2 | 78,9 % |

| Füllstoff<br>Calcit | max. Füllstoff-<br>konzentration |
|---|---|
| ohne Zusatz | 65 % |
| 0,5 % Verbindung 1 | 76,5 % |
| 0,5 % Verbindung 2 | 77 % |
| 0,5 % Verbindung 3 | 75,8 % |

| Füllstoff<br>Calciumsilikat | max. Füllstoff-<br>konzentration |
|---|---|
| 2 % Verbindung 7 | 75 % |

Die vorstehend benutzten Verbindungen haben folgende Struktur:

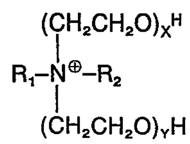 $A^{\ominus}$

| Verbindung | $R_1$ | $R_2$ | Summe X+Y | A |
|---|---|---|---|---|
| 1 | $C_{18}$-Alkyl | Hydroxyethyl | 4 | $Cl^{\ominus}$ |
| 2 | $C_{16}$–$C_{18}$-Alkyl | Methyl | 5 | $Cl^{\ominus}$ |
| 3 | Cocos-alkyl | Wasserstoff | 5 | $CH_3COO^{\ominus}$ |
| 4 | Cocos-alkyl | Wasserstoff | 3 | $Cl^{\ominus}$ |
| 5 | $C_{18}$-Alkyl | Wasserstoff | 8 | $CH_3COO^{\ominus}$ |
| 6 | Cocos-alkyl | Wasserstoff | 3 | $Cl^{\ominus}$ |
| 7 | Cetyl | Methyl | 8 | $Cl^{\ominus}$ |

**Patentansprüche**

1. Hochkonzentrierte wässrige Füllstoffslurries mit einem Gehalt von 0,1 bis 5 Gew.-% einer Verbindung der Formel

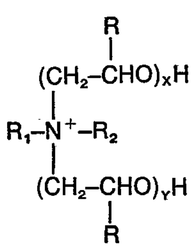 $A^+$ (1)

worin R Wasserstoff oder Methyl, $R_1$ $C_8$–$C_{24}$-Alkyl, $C_8$–$C_{24}$-Alkenyl oder $C_8$–$C_{24}$-Alkylphenyl, $R_2$ Wasserstoff, $C_1$–$C_4$-Alkyl, $C_1$–$C_4$-Hydroxyalkyl, $C_2$–$C_4$-Epoxyalkyl, Benzyl oder eine Gruppe der Formel $-(CH_2CHO)_ZH$ (mit R am CH), X, Y und Z zusammen ein Zahl von 1 bis 20 und A ein Anion bedeutet.

2. Füllstoffslurries nach Anspruch 1 mit einem Gehalt einer Verbindung der Formel 1, wobei R Wasserstoff oder Methyl, $R_1$ $C_{10}$–$C_{18}$-Alkyl, $C_{10}$–$C_{18}$-Alkenyl oder $C_{10}$–$C_{18}$-Alkylphenyl, $R_2$ Wasserstoff, $C_1$–$C_4$-Alkyl, $C_1$–$C_4$-Hydroxyalkyl, $C_2$–$C_4$-Epoxyalkyl, Benzyl oder eine Gruppe der Formel $-(CH_2CHO)_ZH$ (mit R am CH), X, Y und Z zusammen eine Zahl von 2 bis 15 und A ein Anion bedeutet.

**Claims**

1. High concentrated aqueous filler slurries with a content of 0.1 to 5% by weight of a compound of the formula 1

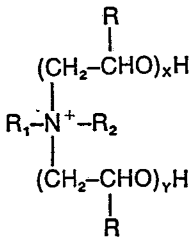

$A^+$ (1)

in which R is hydrogen or methyl, $R_1$ is $C_8$–$C_{24}$-alkyl, $C_8$–$C_{24}$-alkenyl, or $C_8$–$C_{24}$-alkylphenyl, $R_2$ is hydrogen, $C_1$–$C_4$-alkyl, $C_1C_4$-hydroxyalkyl, $C_2$–$C_4$-epoxyalkyl, benzyl or a group of the formula $-(CH_2\underset{R}{C}HO)_zH$, X, Y and Z together are a number from 1 bo 20, and A means an anion.

2. Filter slurries according to Claim 1 with a content of a compound of formula 1, in which R is hydrogen or methyl, $R_1$ is $C_{10}$–$C_{18}$-alkyl, $C_{10}$–$C_{18}$-alkenyl, or $C_{10}$–$C_{18}$-alkylphenyl, $R_2$ is hydrogen, $C_1$–$C_4$-alkyl, $C_1$–$C_4$-hydroxyalkyl, $C_2$–$C_4$-epoxyalkyl, benzyl or a group of the formula $-(CH_2\underset{R}{C}HO)_zH$, X, Y and Z together are a number from 2 to 15, and A means an anion.

**Revendications**

1. Suspensions aqueuses concentrées de matières de charge, avec une teneur de 0,1 à 5%-poids en un composé de formule 1

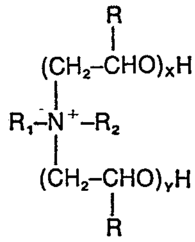

$A^+$ (1)

où R est l'hydrogène ou le radical méthyle, $R_1$ est un radical alkyle à 8 à 24 atomes de carbone, alcényle à 8 à 24 atomes de carbone ou alkylphényle à 8 à 24 atomes de carbone, $R_2$ est l'hydrogène, un radical alkyle á 1 à 4 atomes de carbone, hydroxyalkyle à 1 à 4 atomes de carbone, époxyalkyle à 2 à 4 atomes de carbone, benzyle ou un groupe de formule $-(CH_2\underset{R}{C}HO)_zH$, X, Y et Z faisant ensemble un total de 1 à 20, et A étant un anion.

2. Suspensions de matières de charge selon la revendication 1 contenant un composé de formule 1, où R est l'hydrogène ou le radical méthyle, $R_1$ est un radical alkyle à 10 à 18 atomes de carbone, alcényle à 10 à 18 atomes de carbone ou alkylphényle à 10 à 18 atomes de carbone, $R_2$ est l'hydrogène, un radical alkyle à 1 à 4 atomes de carbone, hydroxyalkyle à 1 à 4 atomes de carbone, époxyalkyle à 2 à 4 atomes de carbone benzyle ou un groupe de formule $-(CH_2\underset{R}{C}HO)_zH$, X, Y et Z faisant ensemble un total de 2 à 15, et A étant un anion.